# EUROPEAN PATENT SPECIFICATION

(11) **EP 0 435 522 B1**
(45) Date of publication and mention of the grant of the patent: **01.05.1996**
(21) Application number: 90313611.7
(22) Date of filing: 13.12.1990
(51) Int. Cl.: G06K 9/64

(54) **Image location identification apparatus**
Bildstellungsidentifizierungssgerät
Appareil d'identification de l'emplacement d'une image

(30) Priority: 26.12.1989 JP 335055/89
(43) Date of publication of application: 03.07.1991
(73) Proprietor: KABUSHIKI KAISHA TOSHIBA, Kawasaki-shi, Kanagawa-ken 210, Tokyo (JP)
(72) Inventor: Numagami, Hideo, 1-1, Shibaura 1-chome, Minato-ku, Tokyo (JP)
(74) Representative: BATCHELLOR, KIRK & CO.

(56) References cited:
- EP-A- 0 119 674
- IEEE INTERNATIONAL CONFERENCE ON ROBOTICS AND AUTOMATION, MARCH 31-APRIL 3, 1987. RALEIGH (US); IEEE PRESS, vol. 3, NEW YORK (US) pages 2033 - 2038;K.D.RUEB ET AL.: 'Analysis of point feature representation of a perspective image'
- EIGHT INTERNATIONAL CONFERENCE ON PATTERN RECOGNITION, PARIS, FRANCE, OCTOBER 27-32, 1986; IEEE PRESS NEW YORK (US) pages 546 - 554; ANDREW K.C,. WONG: 'an algorithm for constellation matching'
- PATTERN RECOGNITION. vol. 20, no. 5, 1987, ELMSFORD US pages 525 - 533; ARDESHIR GOSHTASBY: 'piecewise cubic matching functions for image registration'
- INFORMATION PROCESSING LETTERS vol. 9, no. 4, 20 November 1979, THE NETHERLANDS pages 190 - 193; D.T. LEE ET AL.: 'location of multiple points in a planar subdivision'

## Description

The present invention relates to an image location identification apparatus for matching image data taken by an imaging televion camera (ITV) with a corresponding map stored on a data base.

When an urban area is monitored using ITV located in a helicopter, it is necessary for captured image data to be matched with a corresponding map, which may represent administrative district data or road data, on a display.

For example, when a fire breaks out, a fire spot is taken by ITV from the sky. The image data and its global location data (latitude, longitude and angle of direction of view) are sent to a host computer where a map corresponding to the image data is retrieved from a map data base, according to the global location data. The image data is matched with the map, which includes houses, buildings and road data, on display. Therefore, according to the outbreak point of a fire, the path of a fire after a prescribed time can be simulated on the map. Then, against the path simulation, lead way and refuge places for inhabitants are determined.

In such a case, because the image data is matched with the map by using only the global location data, an error of several hundred metres may occur between the image data and the map, which are matched on the display. Therefore, if exact location identification is necessary for the image data and the map, the user must designate control points on the image data and the map for geometrical correction. However, because image data are sent momentarily, the designation of control points by interactive mode is troublesome for the user. Furthermore, if the user is not familiar with the neighbourhood, he cannot rapidly designate control points on the display.

IEEE International Conference on Robotics and Automation, 1987, vol. 3, pages 2033-2038 describes analysis of point feature representation of a perspective image. The positions of three model points u,v,w are specified in the model coordinate system. The corresponding points u",v",w" on the image plane are calculated by projecting a ray from the camera focal point. (The camera coordinate system is centered at the camera focal point). In this way, it is possible to calculate the set of transforms capable of mapping the model points into the image points according to the camera focal point (the orientation of the camera coordinate system). To verify a model hypothesis, the object features which should be visible are compared to image feature positioned near the projected location of the object feature given the hypothesised image transform.

Accordingly, it is an object of the present invention to provide an image location identification apparatus, comprising:
image input means for entering image data and corresponding global location data;
map memory means for storing a plurality of maps, each map having global location data and control point data;
retrieval means for retrieving from the map memory means, a stored map whose global location data coincide with the global location data of the image data;
extract means for extracting from the image data, a first set of at least four control point data for calculating a transformation coefficient and a second set of other control point data for verifying the transformation coefficient;
calculation means for selecting a first part of at least four control point data from the control point data of the map retrieved by the retrieving means, for forming all permutations of the first part of the control point data of the map, for calculating the transformation coefficient between the image data and the map, by using the first set of the control point data of the image data and the first part of the control point data for each permutation of the map, and for calculating coordinate point data corresponding to the second set of other control point data of the image data by using the transformation coefficient;
verification means for determining that the transformation coefficient is correct in case that the coordinate point data are respectively situated within a predetermined limit of a second part of the control point data of the map, and in which when the coordinate point data for each permutation of the first part of the control point data are not situated within the predetermined limit of the second part of the control point data, the calculation means selects different first part of the control point data from the map, forms all permutations of the different first part of the control point data of the map, calculates transformation coefficient between the image data and the map, by using the first set of the control point data of the image data and the different first part of the control point data for each permutation of the map, and calculates another coordinate point data corresponding to the second set of the control point data of the image data by using another transformation coefficient until other coordinate point data are respectively situated within the predetermined limit of different second part of the control point data of the map.

In order that the invention may be more readily understood, it will now be described, by way of example only, with reference to the accompanying drawings, in which:-
Figure 1 shows schematically an image location identification apparatus of the present invention;
Figure 2 shows a flow chart of the process for identifying image location according to the present invention;
Figure 3 shows an example of the map area corresponding to the image data;
Figure 4 shows an explanatory example of the formula of co-ordinate transformation used for identifying location between the image data and the map;
Figure 5 shows an example of control points of the image data; and
Figure 6 shows an example of predetermined control points of the map.

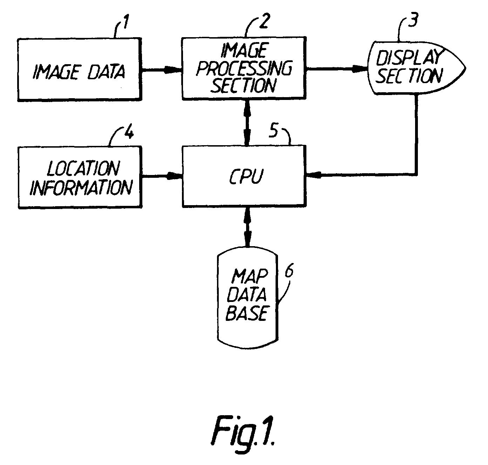

Figure 1 shows the construction of an image location identification apparatus according to the present invention. Image data 1 is a video signal which is taken by an ITV mounted in a helicopter. Image processing section 2 quantize 512 x 512 pixels for the image data 1 and stores them. Then the section 2 extracts control points for location identification from quantized image data under the control of CPU 5. Location information 4 is global location, such as latitude, longitude and height, measured by the global positioning system or inertial navigation system of the helicopter. The location information 4 also includes camera parameters, such as direction and angle of view. Map data base 6 comprises memorized maps of the area being monitored which have global location data in the form of latitude and longitude for retrieval. Each map also includes data of roads, buildings, houses and many control points for location identification. CPU 5 controls all the other sections 1, 2, 3, 4, 6 and retrieves a map corresponding to the image data 1 from the map data base 6, according to the location information 4. Then CPU 5 identifies the location between the image data 1 and the retrieved map, according to predetermined control points of the retrieved map and control points of the image data extracted by the image processing section 2. Lastly, CPU 5 makes the image data 1 match with the map on display section 3.

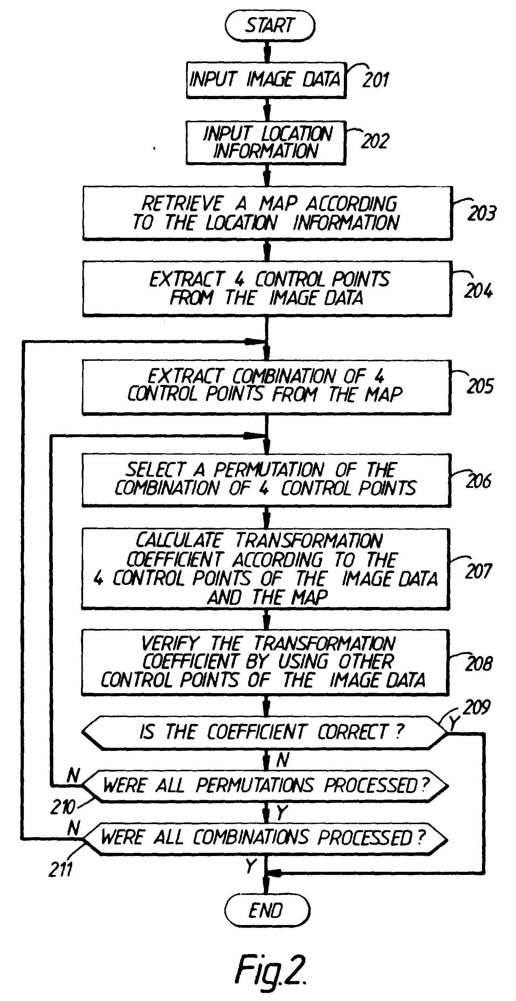

Figure 2 shows a flow chart of the process for identifying image location. Firstly, image data 1 is quantized and stored in the image processing section 2 (step 201). Next, according to the location information 4, a map area corresponding approximately to the image data 1 is determined and the map is retrieved, having area to spare (for example, 200 m extra width at the top and bottom and left and right sides (step 202, 203).

The calculation of map area of map data base 6 will be explained, assuming that the latitude, longitude and height of the image taking position are X, Y Z. Furthermore, α and β represent the visual field angle directions of the camera. Secondly, area 12 which includes an admissible error limit against the area 11 is calculated. Finally, area 13 is the area 12 rotated in the direction of the angle obtained from the direction data.

Next, as control points for location identification, intersections of main roads are extracted (step 204). The colour and shape of roads are different from those of buildings, parks, or green zones, and so on. Therefore, the roads as regions having a character of a predetermined colour and figure is extracted. Then the central line of each road is extracted as a control point. In this case, it is not necessary for all road regions and all cross points to be extracted, and a minimum of road regions and cross points for location identification may be extracted.

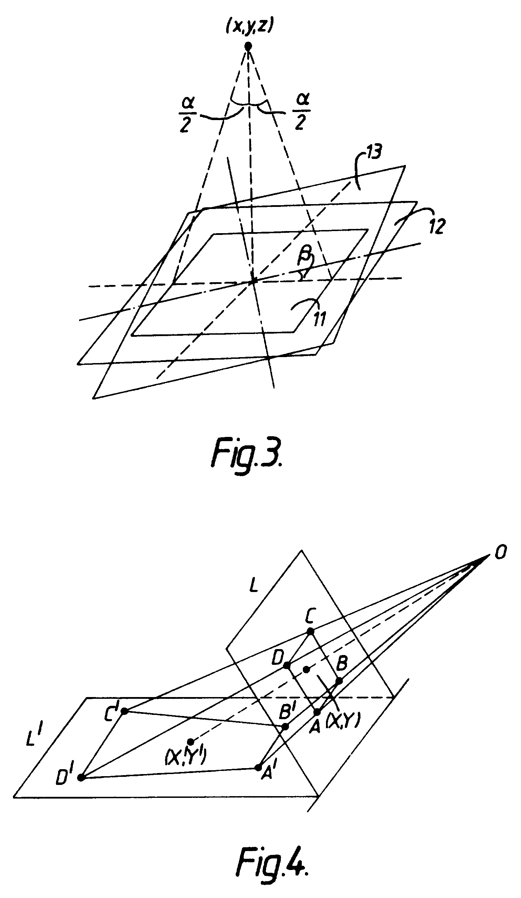

Co-ordinate transformation for location identification is represented as a quadratic formula of projection transformation, assuming that the control points are situated on same plane. Namely, if a narrow area is taken by ITV, the ground surface can be regarded as a flat plane. Therefore, as shown in Figure 4, assuming that image data plane taken by ITV is L and retrieval map plane is L', point (X', Y') on the plane L' corresponding to projection central point (X, Y) on the plane L is calculated by using the following formula:$\text{X' = (b1X + b2Y = b3) / (b7X + b8Y + 1)}$$\text{Y' = (b4X + b5Y + b6) / (b7X + b8Y + 1).}$

Coefficients b1 - b8 of above transformation formula are calculated by providing at least four control points corresponding to image data 1 and retrieval map data. In Figure 4, four control points of image data L are A, B, C, D and four control points of retrieval map L' are A', B', C', D'.

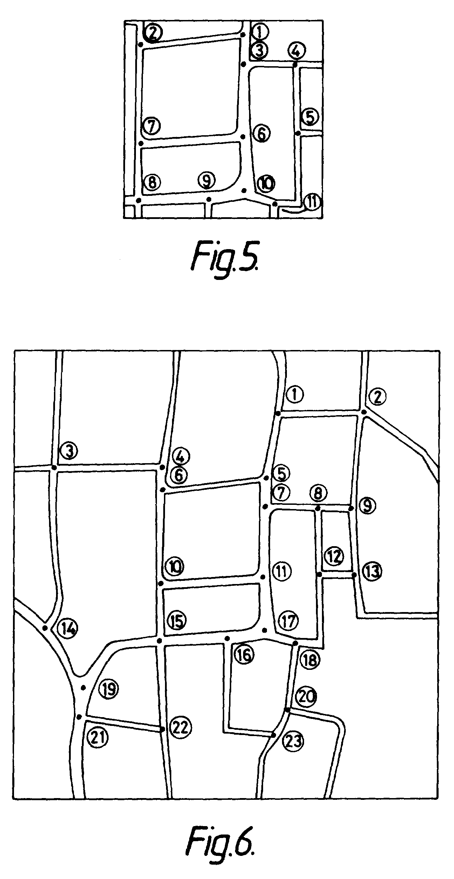

In this place, as shown in Figure 5, assume that eleven control points are extracted in image data 1. From the eleven control points, four control points which are distributed over the image data 1 are extracted as the control points for calculating transformation coefficients. In Figure 5, four control points (2, 4, 8, 11), from which the sum of mutual distance among the four control points is a maximum, are the ones to be used for calculating the transformation coefficients and other seven control points (1, 3, 5, 6, 7, 9, 10) are the ones for verifying the transformation coefficients. As shown in Figure 6, twenty three control points have been registered in advance on the retrieval map. From the control points (1 - 23), four control points are selected in order (step 205) and all permutations of the selected four control points are formed.

The procedure sequentially calculates the transformation coefficients with respect to all the possible combinations of the reference points on the image data for calculating the coefficients and any four reference points of the twenty three reference points (1 - 23) on the map data (step 205, step 206 and step 207).

The procedure calculates the co-ordinates of the reference points for verification on the map data by use of the thus calculated transformation coefficients. Further the procedure judges the authenticity of the transformation coefficients by verifying whether or not the reference points of the map data are present in the vicinity of their corresponding positions (step 208).

As for the first permutation (step 206), transformation coefficients between co-ordinate systems of the image data and the map are calculated by using four control points (2, 4, 8, 11) of the image data and the first permutation of selected four control points of the map (step 207). Then, by using the transformation coefficient, a co-ordinate point corresponding to the other control points (1, 3, 5, 6, 7, 9, 10) of the image data is calculated on the map and it is determined whether the predetermined control point is situated near the co-ordinate point on the map (step 208). If the predetermined controls points are situated near all of the co-ordinate points on the map, respectively, the transformation coefficient is correct (step 209). Therefore, according to the corresponding control points, the image data is matched with the map on the display section 3. However, if the predetermined control points are not situated near all of the co-ordinate points on the map, respectively, the transformation coefficient is not correct. Therefore, a second permutation of the selected four control points, using the above-mentioned processing (step 207, 208, 209) is repeated (step 210). If the transformation coefficient is not correct as for all permutations of the selected four points, another four control points are selected from the control points (1 - 23) in the map (step 211). As for the second selected four control points, the above-mentioned processing (step 206, 207, 208, 209, 210) is repeated. This process is repeated until a correct transformation coefficient is found with a different four control points selected, in turn, and the above-mentioned processing being repeated.

In Figure 6, first four control points (1, 2, 3, 4) are selected from predetermined control points (1 - 23). All permutation of the first four control points are (1, 2, 3, 4), (1, 2, 4, 3), (1, 3, 2, 4), (1, 3, 4, 2), (1, 4, 2, 3), (1, 4, 3, 2,), (2, 1, 3, 4), (2, 1, 4, 3), (2, 3, 1, 4), (2, 3, 4, 1), (2, 4, 1, 3), (2, 4, 3, 1), (3, 1, 2, 4), (3, 1, 4, 2,), (3, 2, 1, 4), (3, 2, 4, 1), (3, 4, 1, 2), (3, 4, 2, 1), (4, 1, 2, 3), (4, 1, 3, 2), (4, 2, 1, 3), (4, 2, 3, 1), (4, 3, 1, 2), (4, 3, 2, 1). Then, transformation coefficients between each permutation and the four control points (2, 4, 8, 11) of the image data (as shown in Figure 5) are calculated, taking account of the control points order. In this case, since each transformation coefficient of all permutations is not correct, the second four control points (1, 2, 3, 5) are selected from predetermined control points (1 - 23) of the map, and all permutations of the second four control points (1, 2, 3, 5) are formed and each transformation coefficient is calculated for all permutations. In this way, when the same permutation of four control points (6, 8, 15, 18) from the map (as shown in Figure 6) is selected, the transformation coefficient is correct. In short, the transformation coefficient between four control points (6, 8, 15, 18) on the map and four control points (2, 4, 8, 11) on the image data is calculated. According to this transformation coefficient, co-ordinate points corresponding to control points (1, 3, 5, 6, 7, 9, 10) for verifying on the image data are situated just as predetermined control points (5, 7, 10, 11, 12, 16, 17) on the map.

Lastly, by using corresponding control points between the image data and the map, the image data is matched with the map automatically and the image data and the map, when they are matched, are displayed on the display section 3.

## Claims

1. An image location identification apparatus, comprising:
image input means (1,4) for entering image data and corresponding global location data;
map memory means (6) for storing a plurality of maps, each map having global location data and control point data;
retrieval means (5) for retrieving from the map memory means, a stored map whose global location data coincide with the global location data of the image data;
extract means (2) for extracting from the image data, a first set of at least four control point data for calculating a transformation coefficient and a second set of other control point data for verifying the transformation coefficient;
calculation means (5) for selecting a first part of at least four control point data from the control point data of the map retrieved by the retrieving means (5), for forming all permutations of the first part of the control point data of the map, for calculating the transformation coefficient between the image data and the map, by using the first set of the control point data of the image data and the first part of the control point data for each permutation of the map, and for calculating coordinate point data corresponding to the second set of other control point data of the image data by using the transformation coefficient;
verification means (5) for determining that the transformation coefficient is correct in case that the coordinate point data are respectively situated within a predetermined limit of a second part of the control point data of the map, and in which when the coordinate point data for each permutation of the first part of the control point data are not situated within the predetermined limit of the second part of the control point data, the calculation means (5) selects different first part of the control point data from the map, forms all permutations of the different first part of the control point data of the map, calculates transformation coefficient between the image data and the map, by using the first set of the control point data of the image data and the different first part of the control point data for each permutation of the map, and calculates another coordinate point data corresponding to the second set of the control point data of the image data by using another transformation coefficient until other coordinate point data are respectively situated within the predetermined limit of different second part of the control point data of the map.

2. The image location identification apparatus according to claim 1, wherein the global location data are latitude, longitude, height and angle of direction of view.

3. The image location identification apparatus according to claim 1 or 2, wherein the retrieval means retrieves a map whose area includes the image data area and additional area sufficiently to overcome global location data error.

4. The image location identification apparatus to any preceding claim, further including display means (3) for displaying the image data which is matched with the map, when the condition for the co-ordinate point data is satisfied.

5. The image location identification apparatus according to claim 1, wherein the first set of control point data are selected so that the sum of the mutual distance among the four control points is a maximum.

6. A method of identifying image location comprising the steps of:
entering image data and corresponding global location data;
memorising a plurality of maps, with each map having global location data and control point data;
retrieving from the plurality of maps, a memorised map whose global location data coincide with the global location data of the image data;
extracting from the image data, a first set of at least four control point data for calculating a transformation coefficient and a second set of other control point data for verifying the transformation coefficient;
selecting a first part of at least four control point data from the control point data of the map at the retrieving step;
forming all permutations of the first part of the control point data of the map;
calculating the transformation coefficient between the image data and the map by using the first set of the control point data of the image data and the first part of the control point data for each permutation of the map;
calculating coordinate point data corresponding to the second set of other control point data of the image by using the transformation coefficient;
determining that the transformation coefficient is correct in case that the coordinate point data are respectively situated within a predetermined limit of a second part of the control point data of the map,
selecting different first part of the control point data from the map, when the coordinate point data for each permutation of the first part of the control point data are not situated within the predetermined limit of the second part of the control point data;
forming all permutations of the different first part of the control point data of the map;
calculating transformation coefficient between the image data and the map by using the first set of the control point data of the image data and the different first part of the control point data for each permutation of the map; and
calculating another coordinate point data corresponding to the second set of the control point data of the image data by using another transformation coefficient, until other coordinate point data are respectively situated with the predetermined limit of different second part of the control point data of the map.

7. The method of identifying image location according to claim 6, wherein the global location data are latitude, longitude, height and angle direction of view.

8. The method of identifying image location according to claim 7, wherein, at the retrieving step, a map area includes the image data area and additional area sufficient to overcome global location data error.

9. The method of identifying image location according to claim 8, further comprising the step of displaying the image data which is matched with the map when the condition for the co-ordinate point data is satisfied.

10. The method of identifying image location according to claim 6, wherein the first set of control point data are selected so that the sum of the mutual distance among the four control points is a maximum.

## Patentansprüche

1. Bild-Ortsidentifizierungsvorrichtung mit:
Bildeingabemitteln (1, 4) zum Eingeben von Bilddaten und entsprechenden globalen Ortsdaten;
Kartenspeichermitteln (6) zum Speichern einer Mehrzahl von Karten, welche Karten jeweils globale Ortsdaten und Kontrollpunktdaten aufweisen;
Abrufmitteln (5) zum Abrufen einer gespeicherten Karte, deren globale Ortsdaten mit den globalen Ortsdaten der Bilddaten übereinstimmen, aus den Kartenspeichermitteln;
Extraktionsmitteln (2), um aus den Bilddaten einen ersten Satz von wenigstens vier Kontrollpunktdaten zum Berechnen eines Transformationskoeffizienten und einen zweiten Satz von anderen Kontrollpunktdaten zum Verifizieren des Transformationskoeffizienten herauszuziehen;
Rechenmitteln (5) zum Auswählen eines ersten Teils von wenigstens vier Kontrollpunktdaten aus den Kontrollpunktdaten der durch die Abrufmittel (5) abgerufenen Karte, zum Bilden aller Permutationen des ersten Teils der Kontrollpunktdaten der Karte, zum Berechnen des Transformationskoeffizienten zwischen den Bilddaten und der Karte, indem der erste Satz der Kontrollpunktdaten der Bilddaten und der erste Teil der Kontrollpunktdaten für jede Permutation der Karte verwendet wird, und zum Berechnen der dem zweiten Satz anderer Kontrollpunktdaten der Bilddaten entsprechenden Koordinatenpunktdaten, indem der Tranformationskoeffizient verwendet wird;
Verifikationsmitteln (5) zum Feststellen, daß der Transformationskoeffizient korrekt ist, falls die Koordinatenpunktdaten jeweils innerhalb einer vorgegebenen Grenze eines zweiten Teils der Kontrollpunktdaten der Karte liegen, und wobei, wenn die Koordinatenpunktdaten für jede Permutation des ersten Teils der Kontrollpunktdaten nicht innerhalb der vorgegebenen Grenze des zweiten Teils der Kontrollpunktdaten liegen, die Rechenmittel (5) einen verschiedenen ersten Teil der Kontrollpunktdaten der Karte auswählen, alle Permutationen des verschiedenen ersten Teils der Kontrollpunktdaten der Karte bilden, den Transformationskoeffizienten zwischen den Bilddaten und der Karte berechnen, indem der erste Satz der Kontrollpunktdaten der Bilddaten und der verschiedene erste Teil von Kontrollpunktdaten für jede Permutation der Karte verwendet wird, und andere Koordinatenpunktdaten entsprechend dem zweiten Satz der Kontrollpunktdaten der Bilddaten berechnen, indem ein anderer Transformationskoeffizient verwendet wird, bis die anderen Koordinatenpunktdaten jeweils innerhalb innerhalb der vorgegebenen Grenze des verschiedenen zweiten Teils der Kontrollpunktdaten der Karte liegen.

2. Bild-Ortsidentifizierungsvorrichtung nach Anspruch 1, wobei die globalen Ortsdaten Breite, Länge, Höhe und Winkel der Sichtrichtung sind.

3. Bild-Ortsidentifizierungsvorrichtung nach Anspruch 1 oder 2, wobei die Abrufmittel eine Karte abrufen, deren Gebiet das Bilddatengebiet enthält und ausreichend zusätzliches Gebiet, um Fehler in den globalen Ortsdaten zu überwinden.

4. Bild-Ortsidentifizierungsvorrichtung nach einem der vorhergehenden Ansprüche, die weiter Anzeigemittel (3) zum Anzeigen der Bilddaten enthält, die als passend zur Karte gefunden wurden, wenn die Bedingung für die Koordinatenpunktdaten erfüllt ist.

5. Bild-Ortsidentifizierungsvorrichtung nach Anspruch 1, wobei der erste Satz von Kontrollpunktdaten so ausgewählt wird, daß die Summe der gegenseitigen Abstände zwischen den vier Kontrollpunkten maximal ist.

6. Verfahren zum Identifizieren des Bild-Ortes, mit den Schritten:
Eingeben von Bilddaten und entsprechenden globalen Ortsdaten;
Speichern einer Vielzahl von Karten, wobei jede Karte globale Ortsdaten und Kontrollpunktdaten aufweist;
Abrufen einer gespeicherten Karte, deren globale Ortsdaten mit den globalen Ortsdaten der Bilddaten übereinstimmen, aus der Mehrzahl von Karten;
Herausziehen eines ersten Satzes von wenigstens vier Kontrollpunktdaten aus den Bilddaten, um einen Transformationskoeffizienten zu berechnen, und eines zweiten Satzes von anderen Kontrollpunktdaten, um den Transformationskoeffizienten zu verifizieren;
Auswählen eines ersten Teils von wenigstens vier Kontrollpunktdaten aus den Kontrollpunktdaten der Karte beim Abrufschritt;
Bilden aller Permutationen des ersten Teils der Kontrollpunktdaten der Karte;
Berechnen des Transformationskoeffizienten zwischen den Bilddaten und der Karte, indem der Satz der Kontrollpunktdaten der Bilddaten und der erste Teil der Kontrollpunktdaten für jede Permutation der Karte verwendet wird;
Berechnen von Koordinatenpunktdaten, die dem zweiten Satz von anderen Kontrollpunktdaten des Bildes unter Verwendung des Transformationskoeffizienten entsprechen;
Feststellen, daß der Transformationskoeffizient korrekt ist, falls die Koordinatenpunktdaten innerhalb einer vorgegebenen Grenze eines zweiten Teils der Kontrollpunktdaten der Karte liegen,
Auswählen eines verschiedenen ersten Teils von Kontrollpunktdaten aus der Karte, wenn die Koordinatenpunktdaten für jede Permutation des ersten Teils der Kontrollpunktdaten nicht innerhalb der vorgegebenen Grenze des zweiten Teils der Kontrollpunktdaten liegen;
Bilden aller Permutationen des verschiedenen ersten Teils der Kontrollpunktdaten der Karte;
Berechnen des Transformationskoeffizienten zwischen den Bilddaten und der Karte, indem der erste Satz von Kontrollpunktdaten der Bilddaten und der verschiedene erste Teil der Kontrollpunktdaten für jede Permutation der Karte verwendet wird; und
Berechnen von anderen Koordinatenpunktdaten, die dem zweiten Satz von Kontrollpunktdaten der Bilddaten unter Verwendung des anderen Transformationskoeffizienten entsprechen, bis die anderen Koordinatenpunktdaten jeweils innerhalb der vorgegebenen Grenze des verschiedenen zweiten Teils der Kontrollpunktdaten der Karte liegen.

7. Verfahren zum Identifizieren von Bild-Orten nach Anspruch 6, wobei die globalen Ortsdaten Breite, Länge, Höhe und Winkel der Sichtrichtung sind.

8. Verfahren zum Identifizieren von Bild-Orten nach Anspruch 7, wobei beim Abrufschritt ein Kartengebiet das Bilddatengebiet und ausreichend zusätzliches Gebiet enthält, um Fehler der globalen Ortsdaten zu überwinden.

9. Verfahren zum Identifizieren von Bild-Orten nach Anspruch 8, welches weiter den Schritt der Anzeige der Bilddaten enthält, die als passend zur Karte gefunden wurden, wenn die Bedingung für die Koordinatenpunktdaten erfüllt ist.

10. Verfahren zum Identifizieren von Bild-Orten nach Anspruch 6, wobei der erste Satz von Kontrollpunktdaten so ausgewählt wird, daß die Summe der gegenseitigen Abstände unter den vier Kontrollpunkten maximal ist.

## Revendications

1. Appareil d'identification d'emplacement d'une image comprenant:-
un moyen permettant d'entrer une image (1, 4) pour entrer les informations d'une image et les informations globales correspondantes sur l'emplacement de l'image;
un moyen à mémoire de stockage de grilles de points (6) pour stocker une pluralité de grilles de points, chaque grille de points ayant des informations globales d'emplacement d'image et des informations de points de contrôle;
un moyen de récupération (5) pour retrouver dans le moyen à mémoire de stockage de grilles de points une grille de points stockée dont les informations globales d'emplacement coïncident avec les informations globales d'emplacement des informations de l'image;
un moyen d'extraction (2) pour extraire dans les informations de l'image, un premier groupe d'informations sur au moins quatre points de contrôle pour calculer un coefficient de transformation, et un second groupe d'informations sur d'autres points de contrôle pour vérifier le coefficient de transformation;
un moyen de calcul (5) pour sélectionner une première partie d'informations sur au moins quatre points de contrôle parmi les informations sur les points de contrôle de la grille de points récupérée à l'aide du moyen de récupération (5) pour former toutes les permutations de la première partie d'informations de points de contrôle de la grille de points, pour calculer le coefficient de transformation entre les informations d'image et la grille de points, en utilisant le premier groupe d'informations de points de contrôle des informations de l'image et la première partie des informations de points de contrôle pour chaque permutation de la grille de points, et pour calculer les informations de points de coordonnées correspondant à l'autre second groupe d'informations sur les autres points de contrôle d'informations de l'image en utilisant le coefficient de transformation;
moyen de vérification (5) pour déterminer que le coefficient de transformation est correct lorsque les informations de points de coordonnées sont respectivement situées à l'intérieur d'une limite prédéterminée d'une seconde partie d'informations d'autres points de contrôle de la grille de points, et dans lequel lorsque les informations de points de coordonnées pour chaque permutation de la première partie d'informations de points de contrôle ne sont pas situées à l'intérieur de la limite prédéterminée de la seconde partie d'informations d'autres points de contrôle, le moyen de calcul (5) sélectionne une autre première partie d'informations de points de contrôle de la grille de points, forme toutes les permutations de cette autre première partie d'informations de points de contrôle de la grille de points, calcule le coefficient de transformation entre les informations d'image et la grille de points en utilisant le premier groupe d'informations de points de contrôle des informations d'image et de l'autre première partie d'informations de points de contrôle pour chaque permutation de la grille de points, et calcule d'autres informations de points de coordonnées correspondant au second groupe d'informations d'autres points de contrôle des informations d'image en utilisant un autre coefficient de transformation jusqu'à ce que les autres informations de points de coordonnées soient respectivement situées à l'intérieur de la limite prédéterminée d'une autre seconde partie des informations de points de contrôle de la grille de points.

2. Appareil d'identification d'emplacement d'une image selon la revendication 1, dans lequel les informations globales d'emplacement sont la latitude, la longitude, la hauteur et l'angle de direction de visualisation.

3. Appareil d'identification d'emplacement d'une image selon la revendication 1 et la revendication 2, dans lequel le moyen de récupération retrouve une grille de points dont la superficie comporte la section d'informations d'image et une sections supplémentaire suffisante pour outrepasser toute erreur d'informations globales sur l'emplacement.

4. Appareil d'identification d'emplacement d'une image selon l'une quelconque des revendications précédentes, comprenant en outre un moyen d'affichage (3) pour afficher les informations d'image qui coïncident sur la grille de points, lorsque les conditions des informations de points de coordonnées sont satisfaites.

5. Appareil d'identification d'emplacement d'image selon la revendication 1, dans laquelle le premier groupe d'informations de points de contrôle a été sélectionné pour que la somme des distances mutuelles entre les quatre points de contrôle soit un maximum.

6. Méthode d'identification d'emplacement d'image comprenant les étapes suivantes:-
entrée des informations d'une image et des informations globales d'emplacement correspondant à l'image;
mise en mémoire d'une pluralité de grilles de points, chacune de ces grilles de points ayant des informations globales d'emplacement et des informations de points de contrôle;
récupération parmi cette pluralité de grilles de points mises en mémoire d'une grille de points dont les informations globales d'emplacement coïncident avec les informations globales d'emplacement des informations de l'image;
extraction à partir des informations d'image, d'un premier groupe d'informations sur quatre points de contrôle pour calculer un coefficient de transformation et d'un second groupe d'informations d'autres points de contrôle pour vérifier le coefficient de transformation;
sélection d'une première partie d'informations d'au moins quatre points de contrôle parmi les informations de points de contrôle de la grille de points à l'étape de récupération;
formation de toutes les permutations de la première partie d'informations sur les points de contrôle de la grille de points;
calcul du coefficient de transformation entre les informations d'image et la grille de points en utilisant le premier groupe d'informations de points de contrôle des informations d'image et la première partie des informations de points de contrôle pour chaque permutation de la grille de points;
calcul des informations de points de coordonnées correspondant au second groupe d'informations sur les autres points de contrôle de l'image en utilisant le coefficient de transformation;
déterminer que le coefficient de transformation est exact au cas où les informations de points de coordonnées seraient situées respectivement à l'intérieur d'une limite prédéterminée de la seconde partie des informations sur les points de contrôle de la grille de points,
sélection d'une autre première partie d'informations sur les points de contrôle à partir de la grille de points lorsque les informations de points de coordonnées de chaque permutation de la première partie d'informations de points de contrôle ne sont pas situées à l'intérieur de la limite prédéterminée de la seconde partie d'informations sur les points de contrôle;
formation de toutes les permutations de l'autre première partie d'informations sur les points de contrôle de la grille de points;
calcul du coefficient de transformation entre les informations d'image et la grille de points en utilisant le premier groupe d'informations sur les points de contrôle des informations d'image et l'autre première partie d'informations sur les points de contrôle pour chaque permutation de la grille de points; et
calcul d'informations sur d'autres points de coordonnées correspondant au second groupe d'informations sur le points de contrôle des informations de l'image en utilisant un autre coefficient de transformation, jusqu'à ce que les informations sur les autres points de coordonnées soient respectivement situées dans une limite prédéterminée de l'autre seconde partie d'informations sur les points de contrôle de la grille de points.

7. Méthode d'identification d'emplacement d'image selon la revendication 6, dans laquelle les informations globales d'emplacement sont la latitude, la longitude, la haute et l'angle de direction de visualisation.

8. Méthode d'identification d'emplacement d'image selon la revendication 7, dans laquelle, à l'étape de récupération, une section de la grille de points est constituée par la section d'informations d'image et par une section supplémentaire suffisante pour outrepasser toute erreur d'informations globales d'emplacement.

9. Méthode d'identification d'emplacement d'image selon la revendication 8, comprenant en outre l'étape d'affichage d'informations d'image qui coïncident avec la grille de points lorsque la condition des informations de points de coordonnées est satisfaite.

10. Méthode d'identification d'emplacement d'image selon la revendication 6, dans laquelle le premier groupe d'informations de points de contrôle est sélectionné de manière à ce que la somme des distances mutuelles entre les quatre points de contrôle soit un maximum.
